# EUROPEAN PATENT SPECIFICATION

(11) **EP 1 387 253 B1**
(45) Date of publication and mention of the grant of the patent: **20.09.2017**
(21) Application number: 03291919.3
(22) Date of filing: 30.07.2003
(51) Int. Cl.: G06F 12/08, G06F 9/318

(54) **Dynamic translation and execution of instructions within a processor**
Dynamische Übersetzung und Befehlsausführung in einem Prozessor
Traduction dynamique et exécution d'instructions dans un processeur

(43) Date of publication of application: 04.02.2004
(73) Proprietor: Texas Instruments Incorporated, Dallas, Texas 75251 (US); TEXAS INSTRUMENTS FRANCE, 06271 Villeneuve Loubet Cedex, Nice (FR)
(72) Inventor: Chauvel, Gerard, 06600 Antibes (FR); D'Inverno, Dominique, 06270 Villeneuve-Loubet (FR); Lasserre, Serge, 83600 Fréjus (FR)
(74) Representative: Zeller, Andreas

(56) References cited:
- EP-A- 1 197 847
- US-A- 5 761 522

## Description

The present invention relates generally to processors and more particularly to the use of "micro-sequences" in the efficient of code (e.g., Java Bytecodes).

Many types of electronic devices are battery operated and thus preferably consume as little power as possible. An example is a cellular telephone. Further, it may be desirable to implement various types of multimedia functionality in an electronic device such as a cell phone. Examples of multimedia functionality may include, without limitation, games, audio decoders, digital cameras, etc. It is thus desirable to implement such functionality in an electronic device in a way that, all else being equal, is fast, consumes as little power as possible and requires as little memory as possible. Improvements in this area are desirable.
European Patent Application No. 1197847 describes a hardware Java accelerator comprising a decode stage and a microcode stage. Separating into the decode and microcode stage allows the decode stage to implement instruction level parallelism, while the microcode stage allows the conversion of a single Java bytecode into multiple native instructions. A reissue buffer is provided which stores the converted instructions and reissues them when the system returns from an interrupt. In this manner, the hardware accelerator need not be flushed upon an interrupt. A native PC monitor is also used. While the native PC is within a specific range, the hardware accelerator is enabled to convert the Java bytecodes into native instructions. When the native PC is outside the range, the hardware accelerator is disabled and the CPU operates on native instructions obtained from the memory.

### BRIEF SUMMARY OF THE INVENTION

The present invention resides in a processor, a method and a system as forth in the appended claims.

### NOTATION AND NOMENCLATURE

Certain terms are used throughout the following description and claims to refer to particular system components. As one skilled in the art will appreciate, semiconductor companies may refer to a component by different names. This document does not intend to distinguish between components that differ in name but not function. In the following discussion and in the claims, the terms "including" and "comprising" are used in an open-ended fashion, and thus should be interpreted to mean "including, but not limited to...'. Also, the term "couple" or "couples" is intended to mean either an indirect or direct connection. Thus, if a first device couples to a second device, that connection may be through a direct connection, or through an indirect connection via other devices and connections.

### BRIEF DESCRIPTION OF THE DRAWINGS

For a more detailed description of the preferred embodiments of the present invention, reference will now be made to the accompanying drawings, wherein:
Figure 1 shows a diagram of a system in accordance with preferred embodiments of the invention and including a Java Stack Machine ("JSM") and a Main Processor Unit ("MPU");
Figure 2 shows a block diagram of the JSM of Figure 1 in accordance with preferred embodiments of the invention;
Figure 3 shows various registers used in the JSM of Figures 1 and 2;
Figure 4 illustrates the preferred operation of the JSM to include "micro-sequences"; and
Figure 5 depicts an exemplary embodiment of the system described herein.

### DETAILED DESCRIPTION OF THE PREFERRED EMBODIMENTS

The following discussion is directed to various embodiments of the invention. Although one or more of these embodiments may be preferred, the embodiments disclosed should not be interpreted, or otherwise used, as limiting the scope of the disclosure, including the claims, unless otherwise specified. In addition, one skilled in the art will understand that the following description has broad application, and the discussion of any embodiment is meant only to be exemplary of that embodiment, and not intended to intimate that the scope of the disclosure, including the claims, is limited to that embodiment.

The subject matter disclosed herein is directed to a programmable electronic device such as a processor. The processor described herein is particularly suited for executing Java^{™} Bytecodes or comparable, code. As is well known, Java is particularly suited for embedded applications. Java is a relatively "dense" language meaning that on average each instruction may perform a large number of functions compared to various other programming languages. The dense nature of Java is of particular benefit for portable, battery-operated devices that preferably include as little memory as possible to save space and power. The reason, however, for executing Java code is not material to this disclosure or the claims which follow. Further, the processor advantageously includes one or more features that permit the execution of the Java code to be accelerated.

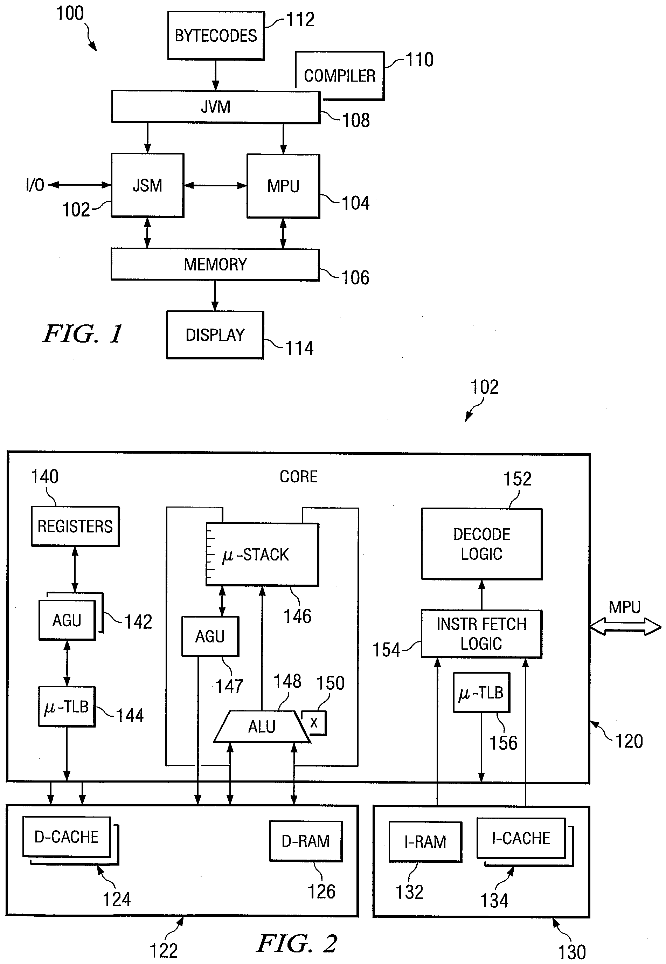

Referring now to Figure 1, a system 100 is shown in accordance with a preferred embodiment of the invention. As shown, the system includes at least two processors 102 and 104. Processor 102 is referred to for purposes of this disclosure as a Java Stack Machine ("JSM") and processor 104 may be referred to as a Main Processor Unit ("MPU"). System 100 may also include memory 106 coupled to both the JSM 102 and MPU 104 and thus accessible by both processors. At least a portion of the memory 106 may be shared by both processors meaning that both processors may access the same shared memory locations. Further, if desired, a portion of the memory 106 may be designated as private to one processor or the other. System 100 also includes a Java Virtual Machine ("JVM") 108, compiler 110, and a display 114. The MPU 104 preferably includes an interface to one or more input/output ("I/O") devices such as a keypad to permit a user to control various aspects of the system 100. In addition, data streams may be received from the I/O space into the JSM 102 to be processed by the JSM 102. Other components (not specifically shown) may be included as desired for various applications.

As is generally well known, Java code comprises a plurality of "bytecodes" 112. Bytecodes 112 may be provided to the JVM 108, compiled by compiler 110 and provided to the JSM 102 and/or MPU 104 for execution therein. In accordance with a preferred embodiment of the invention, the JSM 102 may execute at least some, and generally most, of the Java bytecodes. When appropriate, however, the JSM 102 may request the MPU 104 to execute one or more Java bytecodes not executed or executable by the JSM 102. In addition to executing Java bytecodes, the MPU 104 also may execute non-Java instructions. The MPU 104 also hosts an operating system ("O/S") (not specifically shown) which performs various functions including system memory management, the system task management that schedules the JVM 108 and most or all other native tasks running on the system, management of the display 114, receiving input from input devices, etc. Without limitation, Java code may be used to perform any one of a variety of applications including multimedia, games or web based applications in the system 100, while non-Java code, which may comprise the O/S and other native applications, may still run on the system on the MPU 104.

The JVM 108 generally comprises a combination of software and hardware. The software may include the compiler 110 and the hardware may include the JSM 102. The JVM may include a class loader, bytecode verifier, garbage collector, and a bytecode interpreter loop to interpret the bytecodes that are not executed on the JSM processor 102.

In accordance with preferred embodiments of the invention, the JSM 102 may execute at least two instruction sets. One instruction set may comprise standard Java bytecodes. As is well-known, Java is a stack-based programming language in which instructions generally target a stack. For example, an integer add ("IADD") Java instruction pops two integers off the top of the stack, adds them together, and pushes the sum back on the stack. A "simple" Bytecode instruction is generally one in which the JSM 102 may perform an immediate operation either in a single cycle (e.g., an "iadd" instruction) or in several cycles (e.g., "dup2_x2"). A "complex" Bytecode instruction is one in which several memory accesses may be required to be made within the JVM data structure for various verifications (e.g., NULL pointer, array boundaries). As will be described in further detail below, one or more of the complex Bytecodes may be replaced by a "micro-sequence" comprising various other instructions.

Another instruction set executed by the JSM 102 may include instructions other than standard Java instructions. In accordance with at least some embodiments of the invention, the other instruction set may include register-based and memory-based operations to be performed. This other instruction set generally complements the Java instruction set and, accordingly, may be referred to as a complementary instruction set architecture ("C-ISA"). By complementary, it is meant that a complex Java Bytecode may be replaced by a "micro-sequence" comprising C-ISA instructions. A micro-sequence also may include one or more standard Java Bytecode instructions. The execution of Java may be made more efficient and run faster by replacing some sequences of Bytecodes by preferably shorter and more efficient sequences of C-ISA instructions. The two sets of instructions may be used in a complementary fashion to obtain satisfactory code density and efficiency. As such, the JSM 102 generally comprises a stack-based architecture for efficient and accelerated execution of Java bytecodes combined with a register-based architecture for executing register and memory based C-ISA instructions. Both architectures preferably are tightly combined and integrated through the C-ISA. Because various of the data structures described herein are generally JVM-dependent and thus may change from one JVM implementation to another, the software flexibility of the micro-sequence provides a mechanism for various JVM optimizations now known or later developed.

Figure 2 shows an exemplary block diagram of the JSM 102. As shown, the JSM includes a core 120 coupled to data storage 122 and instruction storage 130. The core may include one or more components as shown. Such components preferably include a plurality of registers 140, three address generation units ("AGUs") 142, 147, micro-translation lookaside buffers (micro-TLBs) 144, 156, a multi-entry micro-stack 146, an arithmetic logic unit ("ALU") 148, a multiplier 150, decode logic 152, and instruction fetch logic 154. In general, operands may be retrieved from data storage 122 or from the micro-stack 146 and processed by the ALU 148, while instructions may be fetched from instruction storage 130 by fetch logic 154 and decoded by decode logic 152. The address generation unit 142 may be used to calculate addresses based, at least in part, on data contained in the registers 140. The AGUs 142 may calculate addresses for C-ISA instructions. The AGUs 142 may support parallel data accesses for C-ISA instructions that perform array or other types of processing. The AGU 147 couples to the micro-stack 146 and may manage overflow and underflow conditions in the micro-stack preferably in parallel. The micro-TLBs 144, 156 generally perform the function of a cache for the address translation and memory protection information bits that are preferably under the control of the operating system running on the MPU 104.

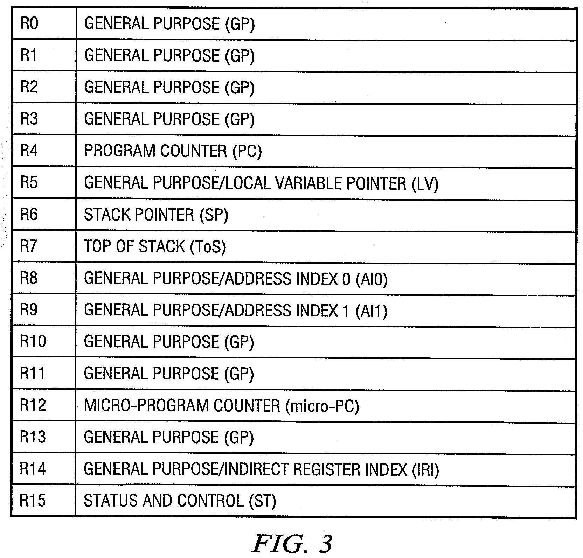

Referring now to Figure 3, the registers 140 may include 16 registers designated as R0-R15. Registers R0-R3, R5, R8-R11 and R13-R14 may be used as general purposes ("GP") registers usable for any purpose by the programmer. Other registers, and some of the GP registers, may be used for specific functions. For example, registers R4 and R12 may be used to store two program counters. Register R4 preferably is used to store the program counter ("PC") and register R12 preferably is used to store a micro-program counter ("micro-PC"). The use of the PC and micro-PC will be explained in greater detail below. In addition to use as a GP register, register R5 may be used to store the base address of a portion of memory in which Java local variables may be stored when used by the current Java method. The top of the micro-stack 146 can be referenced by the values in registers R6 and R7. The top of the micro-stack has a matching address in external memory pointed to by register R6. The values contained in the micro-stack are the latest updated values, while their corresponding values in external memory may or may not be up to date. Register R7 provides the data value stored at the top of the micro-stack. Registers R8 and R9 may also be used to hold the address index 0 ("AI0") and address index 1 ("AI1"). Register R14 may also be used to hold the indirect register index ("IRI"). Register R15 may be used for status and control of the JSM 102. At least one bit (called the "Micro-Sequence-Active" bit) in status register R15 is used to indicate whether the JSM 102 is executing a simple instruction or a complex instruction through a micro-sequence. This bit controls in particular, which program counter is used R4 (PC) or R12 (micro-PC) to fetch the next instruction as will be explained below.

Referring again to Figure 2, as noted above, the JSM 102 is adapted to process and execute instructions from at least two instruction sets, at least one having instructions from a stack-based instruction set (e.g., Java). The stack-based instruction set may include Java Bytecodes. Unless empty, Java Bytecodes may pop data from and push data onto the micro-stack 146. The micro-stack 146 preferably comprises the top n entries of a larger stack that is implemented in data storage 122. Although the value of n may be vary in different embodiments, in accordance with at least some embodiments, the size n of the micro-stack may be the top eight entries in the larger, memory-based stack. The micro-stack 146 preferably comprises a plurality of gates in the core 120 of the JSM 102. By implementing the micro-stack 146 in gates (e.g., registers) in the core 120 of the processor 102, access to the data contained in the micro-stack 146 is generally very fast, although any particular access speed is not a limitation on this disclosure.

The ALU 148 adds, subtracts, and shifts data. The multiplier 150 may be used to multiply two values together in one or more cycles. The instruction fetch logic 154 generally fetches instructions from instruction storage 130. The instructions may be decoded by decode logic 152. Because the JSM 102 is adapted to process instructions from at least two instruction sets, the decode logic 152 generally comprises at least two modes of operation, one mode for each instruction set. As such, the decode logic unit 152 may include a Java mode in which Java instructions may be decoded and a C-ISA mode in which C-ISA instructions may be decoded.

The data storage 122 generally comprises data cache ("D-cache") 124 and data random access memory ("D-RAMset") 126. Reference may be made to copending applications U.S. Serial nos. 09/591,537 filed June 9, 2000 (atty docket TI-29884), 09/591,656 filed June 9, 2000 (atty docket TI-29960), and 09/932,794 filed August 17, 2001 (atty docket TI-31351). The stack (excluding the micro-stack 146), arrays and non-critical data may be stored in the D-cache 124, while Java local variables, critical data and non-Java variables (e.g., C, C++) may be stored in D-RAM 126. The instruction storage 130 may comprise instruction RAM ("I-RAM") 132 and instruction cache (" I-cache") 134. The I-RAMset 132 may be used for "complex" micro-sequenced Bytecodes or micro-sequences or predetermined sequences of code, as will be described below. The I-cache 134 may be used to store other types of Java bytecode and mixed Java/C-ISA instructions.

As noted above, the C-ISA instructions generally complement the standard Java Bytecodes. For example, the compiler 110 may scan a series of Java Bytecodes 112 and replace a complex Bytecode with a micro-sequence as explained previously. The micro-sequence may be created to optimize the function(s) performed by the replaced complex Bytecodes

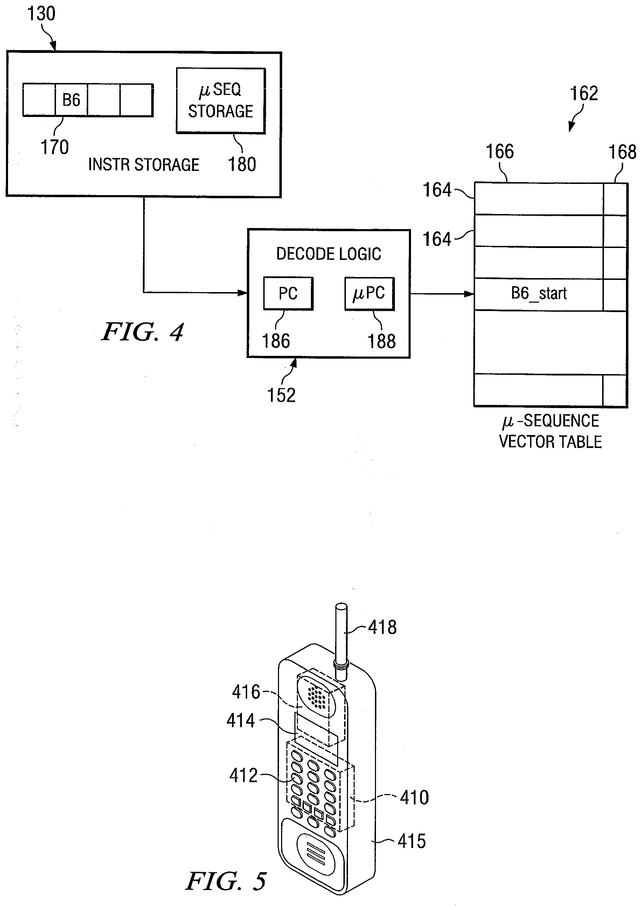

Figure 4 illustrates the operation of the JSM 102 to replace Java Bytecodes with micro-sequences. Figure 4 shows some, but not necessarily all, components of the JSM. In particular, the instruction storage 130, the decode logic 152, and a micro-sequence vector table 162 are shown. The decode logic 152 accesses the instruction storage 130 and the micro-sequence vector table 162. In general and as described above, the decode logic 152 receives instructions (e.g., instructions 170) from instruction storage 130 via instruction fetch logic 154 (Figure 2) and decodes the instructions to determine the type of instruction for subsequent processing and execution. In accordance with the preferred embodiments, the JSM 102 either executed the Bytecode from instructions 170 or replaces a Bytecode from instructions 170 with a micro-sequence as described below.

The micro-sequence vector table 162 may be implemented in the decode logic 152 or as separate logic in the JSM 102. The micro-sequence vector table 162 preferably includes a plurality of entries 164. The entries 164 may include one entry for each Bytecode that the JSM may receive. For example, if there are a total of 256 Bytecodes, the micro-sequence vector table 162 preferably comprises at least 256 entries. Each entry 164 preferably includes at least two fields-a field 166 and an associated field 168. Field 168 may comprise a single bit that indicates whether the instruction 170 is to be directly executed or whether the associated field 166 contains a reference to a micro-sequence. For example, a bit 168 having a value of "0" may indicate the field 166 is invalid and thus, the corresponding Bytecode from instructions 170 is directly executable by the JSM. Bit 168 having a value of "1" may indicate that the associated field 166 contains a reference to a micro-sequence.

If the bit 168 indicates the associated field 166 includes a reference to a micro-sequence, the reference may comprise the full starting address in instruction storage 130 of the micro-sequence or a part of the starting address that can be concatenated with a base address that may be programmable in the JSM. In the former case, field 166 may provide as many address bits as are required to access the full memory space. In the latter case, a register within the JSM registers 140, or preferably within a JSM configuration register accessible through an indirect addressing mechanism using the IRI register, is programmed to hold the base address and the vector table 162 may supply only the offset to access the start of the micro-sequence. Most or all JSM internal registers 140 and any other registers preferably are accessible by the main processor unit 104 and, therefore, may be modified by the JVM as necessary. Although not required, this latter addressing technique may be preferred to reduce the number of bits needed within field 166. At least a portion 180 of the instruction 130 may be allocated for storage of micro-sequences and thus the starting address may point to a location in micro-sequence storage 130 at which a particular micro-sequence can be found. The portion 180 may be implemented in I-RAM 132 shown above in Figure 2.

Although the micro-sequence vector table 162 may be loaded and modified in accordance with a variety of techniques, the following discussion includes a preferred technique. The vector table 162 preferably comprises a JSM resources that is addressable via register R14 functioning as an indirect register index ("IRI") register as mentioned above. A single entry 164 or a block of entries within the vector table 162 may be loaded by information from the data cache 124 (Figure 2). When loading multiple entries (e.g., all of the entries 164) in the table 162, a repeat loop of instructions may be executed. Prior to executing the repeat loop, a register (e.g., R0) preferably is loaded with the starting address of the block of memory containing the data to load into the table. Another register (e.g., R1) preferably is loaded with the size of the block to load into the table. Register R14 is loaded with the value that corresponds to the first entry in the vector table that is to be updated/loaded. An "I" bit in the status register R15 preferably is set to indicate that the register R14 is intended for use as an IRI register. Otherwise, the "I" bit specifies that register R14 is to be used as a general purpose register.

The repeated instruction loop preferably comprises two instructions that are repeated n times. The value n preferably is the value stored in register R1. The first instruction in the loop preferably performs a load from the start address of the block (R0) to the first entry in the vector table 162. The second instruction in the loop preferably adds an "immediate" value to the block start address. The immediate value may be "2" if each entry in the vector table is 16 bits wide. The loop repeats itself to load the desired portions of the total depending on the starting address.

In operation, the decode logic 152 uses a Bytecode from instructions 170 as an index into micro-sequence vector table 162. Once the decode logic 152 locates the indexed entry 164, the decode logic 152 examines the associated bit 168 to determine whether the Bytecode is to be replaced by a micro-sequence. If the bit 168 indicates that the Bytecode can be directly processed and executed by the JSM, then the instruction is so executed. If, however, the bit 168 indicates that the Bytecode is to be replaced by a micro-sequence, then the decode logic 152 preferably changes this instruction into a "NOP" and sets the micro-sequence-active bit (described above) in the status register R15. In another embodiment, the JSM's pipe may be stalled to fetch and replace this micro-sequenced instruction by the first instruction of the micro-sequence. Changing the micro-sequenced Bytecode into a NOP while fetching the first instruction of the micro-sequence permits the JSM to process multi-cycle instructions that are further advanced in the pipe without additional latency. The micro-sequence-active bit may be set at any suitable time such as when the micro-sequence enters the JSM execution stage (not specifically shown).

As described above, the JSM 102 implements two program counters-the PC (register R4) and the micro-PC (register R12). In accordance with a preferred embodiment, one of these two program counters is the active program counter used to fetch and decode instructions. The PC 186 stored in register R4 may be the currently active program counter when the decode logic 152 encounters a Bytecode to be replaced by a micro-sequence. Setting the status register's micro-sequence-active bit causes the micro-program counter 188 (register R12) to become the active program counter instead of the program counter 186. Also, the contents of the field 166 associated with the micro-sequenced Bytecode preferably is loaded into the micro-PC 188. At this point, the JSM 102 is ready to begin fetching and decoding the instructions comprising the micro-sequence. At or about the time the decode logic begins using the micro-PC 188 from register R12, the PC 186 preferably is incremented by a suitable value to point the PC to the next instruction following the Bytecode that is replaced by the micro-sequence. In at least some embodiments, the micro-sequence-active bit within the status register R15 may only be changed when the first instruction of the micro-sequence enters the execute phase of JSM 102 pipe. The switch from PC 186 to the micro-PC 188 preferably is effective immediately after the micro-sequenced instruction is decoded, thereby reducing the latency.

The micro-sequence may end with a predetermined value or Bytecode from the C-ISA called "RtuS" (return from micro-sequence) that indicates the end of the sequence. This C-ISA instruction causes a switch from the micro-PC (register R12) to the PC (register R4) upon completion of the micro-sequence. Preferably, the PC 186 previously was incremented, as discussed above, so that the value of the PC 186 points to the next instruction to be decoded. The instruction may have a delayed effect or an immediate effect depending on the embodiment that is implemented. In embodiments with an immediate effect, the switch from the micro-PC to the PC is performed immediately after the instruction is decoded and the instruction after the RtuS instruction is the instruction pointed to by the address present in the PC 186.

As discussed above, one or more Bytecodes may be replaced with a micro-sequence or group of other instructions. Such replacement instructions may comprise any suitable instructions for the particular application and situation at hand. At least some such suitable instructions are disclosed in co-pending application entitled "Mixed Stack-Based RISC Processor," (atty docket no. TI-35433).

System 100 may be implemented as a mobile cell phone such as that shown in Figure 5. As shown, the mobile communication device includes an integrated keypad 412 and display 414. The JSM processor 102 and MPU processor 104 and other components may be included in electronics package 410 connected to the keypad 412, display 414, and radio frequency ("RF") circuitry 416. The RF circuitry 416 may be connected to an antenna 418.

## Claims

1. A processor (102), comprising:
fetch logic (154) that retrieves instructions from memory (130);
decode logic (152) coupled to said fetch logic (154) and arranged to decode retrieved instructions; **characterized by**
a vector table (162) accessible by said decode logic (152), said vector table (162) comprising a plurality of entries, each entry corresponding to a separate instruction and including a first field (168) indicating whether the corresponding instruction (170) is to be directly executed by the processor (102) or whether the instruction (170) is to be replaced by a micro-sequence; and
an active program counter selected as either a first program counter (186) or a second program counter (188); wherein on detection by the decode logic (152) of a retrieved instruction (170) including a field (168) indicating that the instruction (170) is to be replaced by a micro-sequence, the active program counter switches between the first (186) and second program counters (188).

2. The processor of claim 1, wherein at least some of the entries (164) in the vector table (162) include a second field (166), the second field (166) including a reference to a location in memory (130) at which a micro-sequence that is to replace the corresponding instruction (170) is stored.

3. The processor of claim 2, wherein the second field (166) comprises at least part of a starting address in memory (130) of the micro-sequence.

4. The processor of any preceding claim, wherein the vector table (162) is loaded with entries (164) corresponding to separate instructions from a block of memory (124) accessible to the processor (102) by an indirect addressing mode used in a repeat loop comprising at least one instruction (170).

5. The processor of any preceding claim, wherein any one entry (164) in the vector table (162) can be modified independently of the other entries.

6. The processor of any preceding claim, wherein the active program counter again switches between the first (186) and second (188) program counters when the micro-sequence is completed.

7. The processor of any preceding claim, wherein on detection by the decode logic (152) of a retrieved instruction (170) including a field (168) indicating that the instruction (170) is to be replaced by a micro-sequence, the decode logic is arranged to change the instruction into a no-operation (NOP) and to set a bit indicate that the processor (102) is executing a micro-sequence is active.

8. The processor of any preceding claim, wherein the second program counter (188) is used to fetch and decode instructions (170) comprising a micro-sequence and wherein switching between the first (186) and second (188) program counters comprises switching from the first program counter (186) to the second program counter (188) and loading the second program counter (188) with a starting address of the micro-sequence.

9. The processor of any preceding claim, wherein a plurality of instructions (170) are replaceable by a corresponding micro-sequence.

10. A method, comprising:
fetching an instruction (170) from memory; and **characterized by**
accessing a vector table (172) comprising a plurality of entries (164), each entry corresponding to a separate instruction (170) and including a first field (168) indicating whether the corresponding instruction (170) is to be directly executed by the processor (102) or whether the instruction (170) is to be replaced by a micro-sequence;
examining a first field (168) of an entry in the vector table (162) corresponding to the retrieved instruction (170); and
on detection of a field (168) indicating that the instruction (170) is to be replaced by a micro-sequence, switching between the first (186) and second program counters (188).

11. The method of claim 10, further comprising replacing the instruction (170) with a micro-sequence.

12. The method of claim 10 or 11, further comprising programming the vector table (162) to specify which instructions are to be executed directly and which instructions are to be replaced a micro-sequence.

13. A system, comprising:
a first processor (104); and
a second processor (102) coupled to said first processor (104), said second processor (102) comprising the processor of any of claims 1 to 9.

14. A mobile communication device, comprising the system of claim 13.

## Patentansprüche

1. Prozessor (102), der Folgendes umfasst:
eine Abruflogik (154), die Anweisungen aus einem Speicher (130) wiedergewinnt;
eine Decodierlogik (152), die an die Abruflogik (154) gekoppelt ist und ausgelegt ist, wiedergewonnene Anweisungen zu decodieren;
**gekennzeichnet durch**
eine Vektortabelle (162), auf die durch die Decodierlogik (152) zugegriffen werden kann, wobei die Vektortabelle (162) mehrere Einträge umfasst, wobei jeder Eintrag einer einzelnen Anweisung entspricht und ein erstes Feld (168) enthält, das angibt, ob die entsprechende Anweisung (170) unmittelbar durch den Prozessor (102) auszuführen ist oder ob die Anweisung (170) durch eine Mikrosequenz zu ersetzen ist; und
einen aktiven Programmzähler, der entweder als ein erster Programmzähler (186) oder als ein zweiter Programmzähler (188) ausgewählt ist;
wobei bei der Detektion durch die Decodierlogik (152) einer wiedergewonnenen Anweisung (170), die ein Feld (168) enthält, das angibt, dass die Anweisung (170) durch eine Mikrosequenz zu ersetzen ist, der aktive Programmzähler zwischen dem ersten (186) und dem zweiten Programmzähler (188) wechselt.

2. Prozessor nach Anspruch 1, wobei zumindest einige der Einträge (164) in der Vektortabelle (162) ein zweites Feld (166) enthalten, wobei das zweite Feld (166) einen Verweis auf einen Ort in einem Speicher (130) enthält, an dem eine Mikrosequenz, die die entsprechende Anweisung (170) ersetzen soll, gespeichert ist.

3. Prozessor nach Anspruch 2, wobei das zweite Feld (166) zumindest einen Teil einer Startadresse in dem Speicher (130) der Mikrosequenz umfasst.

4. Prozessor nach einem vorhergehenden Anspruch, wobei die Vektortabelle (162) mit Einträgen (164) gefüllt ist, die einzelnen Anweisungen von einem Speicherblock (124), auf den durch den Prozessor (102) durch eine indirekte Adressierbetriebsart, die in einer Wiederholungsschleife verwendet wird, die mindestens eine Anweisung (170) umfasst, zugegriffen werden kann, entsprechen.

5. Prozessor nach einem vorhergehenden Anspruch, wobei ein Eintrag (164) in der Vektortabelle (162) unabhängig von den anderen Einträgen geändert werden kann.

6. Prozessor nach einem vorhergehenden Anspruch, wobei der aktive Programmzähler erneut zwischen dem ersten (186) und dem zweiten (188) Programmzähler wechselt, wenn die Mikrosequenz abgeschlossen ist.

7. Prozessor nach einem vorhergehenden Anspruch, wobei bei der Detektion durch die Decodierlogik (152) einer wiedergewonnenen Anweisung (170), die ein Feld (168) enthält, das angibt, dass die Anweisung (170) durch eine Mikrosequenz zu ersetzen ist, die Decodierlogik ausgelegt ist, die Anweisung in einen Nicht-Vorgang (NOP) zu ändern und ein Bit so einzustellen, dass es angibt, dass der Prozessor (102), der eine Mikrosequenz ausführt, aktiv ist.

8. Prozessor nach einem vorhergehenden Anspruch, wobei der zweite Programmzähler (188) verwendet wird, um Anweisungen (170), die eine Mikrosequenz umfassen, abzurufen und zu decodieren, und wobei das Wechseln zwischen dem ersten (186) und dem zweiten (188) Programmzähler umfasst, von dem ersten Programmzähler (186) zu dem zweiten Programmzähler (188) zu wechseln und den zweiten Programmzähler (188) mit einer Startadresse der Mikrosequenz zu laden.

9. Prozessor nach einem vorhergehenden Anspruch, wobei mehrere Anweisungen (170) durch eine entsprechende Mikrosequenz ersetzbar sind.

10. Verfahren, das Folgendes umfasst:
Abrufen einer Anweisung (170) aus einem Speicher; und
**gekennzeichnet durch**
Zugreifen auf eine Vektortabelle (172), die mehrere Einträge (164) umfasst, wobei jeder Eintrag einer einzelnen Anweisung (170) entspricht und ein erstes Feld (168) enthält, das angibt, ob die entsprechende Anweisung (170) unmittelbar durch den Prozessor (102) auszuführen ist oder ob die Anweisung (170) durch eine Mikrosequenz zu ersetzen ist;
Untersuchen eines ersten Feldes (168) eines Eintrags in der Vektortabelle (162), der der wiedergewonnenen Anweisung (170) entspricht; und
bei Detektion eines Feldes (168), das angibt, dass die Anweisung (170) durch eine Mikrosequenz zu ersetzen ist, Wechseln zwischen dem ersten (186) und dem zweiten Programmzähler (188).

11. Verfahren nach Anspruch 10, das ferner umfasst, die Anweisung (170) durch eine Mikrosequenz zu ersetzen.

12. Verfahren nach Anspruch 10 oder 11, das ferner umfasst, die Vektortabelle (162) zu programmieren, um zu spezifizieren, welche Anweisungen unmittelbar auszuführen sind und welche Anweisungen durch eine Mikrosequenz zu ersetzen sind.

13. System, das Folgendes umfasst:
einen ersten Prozessor (104); und
einen zweiten Prozessor (102), der an den ersten Prozessor (104) gekoppelt ist, wobei der zweite Prozessor (102) den Prozessor nach einem der Ansprüche 1 bis 9 umfasst.

14. Mobilkommunikationsvorrichtung, die das System nach Anspruch 13 umfasst.

## Revendications

1. Processeur (102), comprenant :
une logique d'extraction (154) qui récupère des instructions à partir d'une mémoire (130);
une logique de décodage (152) couplée à ladite logique d'extraction (154) et conçue pour décoder des instructions récupérées ;
**caractérisé par**
une table de vecteurs (162) accessible par ladite logique de décodage (152), ladite table de vecteurs (162) comprenant une pluralité d'entrées, chaque entrée correspondant à une instruction séparée et comportant un premier champ (168) indiquant si l'instruction correspondante (170) doit être exécutée directement par le processeur (102) ou si l'instruction (170) doit être remplacée par une micro-séquence ; et
un compteur de programme actif sélectionné comme un premier compteur de programme (186) ou un deuxième compteur de programme (188) ; lors de la détection par la logique de décodage (152) d'une instruction récupérée (170) comportant un champ (168) indiquant que l'instruction (170) doit être remplacée par une micro-séquence, le compteur de programme actif commutant entre les premier (186) et deuxième (188) compteurs de programme.

2. Processeur selon la revendication 1, dans lequel au moins certaines des entrées (164) dans la table de vecteurs (162) comprennent un deuxième champ (166), le deuxième champ (166) comportant une référence à un emplacement en mémoire (130) auquel une micro-séquence qui doit remplacer l'instruction correspondante (170) est stockée.

3. Processeur selon la revendication 2, dans lequel le deuxième champ (166) comprend au moins une partie d'une adresse de départ en mémoire (130) de la micro-séquence.

4. Processeur selon l'une quelconque des revendications précédentes, dans lequel la table de vecteurs (162) est chargée avec des entrées (164) correspondant à des instructions séparées à partir d'un bloc de mémoire (124) accessible au processeur (102) par un mode d'adressage indirect utilisé dans une boucle de répétition comprenant au moins une instruction (170).

5. Processeur selon l'une quelconque des revendications précédentes, dans lequel toute entrée (164) dans la table de vecteurs (162) peut être modifiée indépendamment des autres entrées.

6. Processeur selon l'une quelconque des revendications précédentes, dans lequel le compteur de programme actif commute à nouveau entre les premier (186) et deuxième (188) compteurs de programme lorsque la micro-séquence est exécutée.

7. Processeur selon l'une quelconque des revendications précédentes, dans lequel lors de la détection par la logique de décodage (152) d'une instruction récupérée (170) comprenant un champ (168) indiquant que l'instruction (170) doit être remplacée par une micro-séquence, la logique de décodage est conçue pour changer l'instruction en une non opération (NOP) et pour positionner un bit indiquant que le processeur (102) exécute une micro-séquence active.

8. Processeur selon l'une quelconque des revendications précédentes, dans lequel le deuxième compteur de programme (188) est utilisé pour extraire et décoder des instructions (170) comprenant une micro-séquence et l'étape de commutation entre les premier (186) et deuxième (188) compteurs de programme comprenant commuter depuis le premier compteur de programme (186) vers le deuxième compteur de programme (188) et charger le deuxième compteur de programme (188) avec une adresse de départ de la micro-séquence.

9. Processeur selon l'une quelconque des revendications précédentes, dans lequel une pluralité d'instructions (170) sont remplaçables par une micro-séquence correspondante.

10. Procédé, comprenant :
extraire une instruction (170) à partir de la mémoire ; et
**caractérisé par**
accéder à une table de vecteurs (172) comprenant une pluralité d'entrées (164), chaque entrée correspondant à une instruction séparée (170) et comportant un premier champ (168) indiquant si l'instruction correspondante (170) doit être exécutée directement par le processeur (102) ou si l'instruction (170) doit être remplacée par une micro-séquence ;
examiner un premier champ (168) d'une entrée dans la table de vecteurs (162) correspondant à l'instruction récupérée (170) ; et
lors de la détection d'un champ (168) indiquant que l'instruction (170) doit être remplacée par une micro-séquence, commuter entre les premier (186) et deuxième (188) compteurs de programme.

11. Procédé selon la revendication 10, comprenant en outre : remplacer l'instruction (170) par une micro-séquence.

12. Procédé selon la revendication 10 ou 11, comprenant en outre : programmer la table de vecteurs (162) pour spécifier quelles instructions doivent être exécutées directement et quelles instructions doivent être remplacées par une micro-séquence.

13. Système, comprenant :
un premier processeur (104) ; et
un deuxième processeur (102) couplé au dit premier processeur (104), ledit deuxième processeur (102) comprenant le processeur selon l'une quelconque des revendications 1 à 9.

14. Dispositif de communication mobile, comprenant le système de la revendication 13.
